# EUROPÄISCHE PATENTANMELDUNG

(11) **EP 2 703 933 A2**
(43) Veröffentlichungstag der Anmeldung: **05.03.2014**
(21) Anmeldenummer: 13004189.0
(22) Anmeldetag: 26.08.2013
(51) Int. Cl.: G06F 1/16, F24C 15/20

(54) **Dunstabzugshaube**

(30) Priorität: 01.09.2012 DE 202012008391 U
(71) Anmelder: Exklusiv-Hauben Gutmann GmbH, 75417 Mühlacker (DE)
(72) Erfinder: Fernandez Salgado, Alicia, 76571 Gaggenau (DE)
(74) Vertreter: Börjes-Pestalozza, Heinrich

(57) **Zusammenfassung**

Die Erfindung betrifft eine Dunstabzugshaube (1) mit einem Abzugskamin (2) und einem an dessen freiem Ende angeordneten Haubenkörper (3), in welchen ein Luftstromweg für an wenigstens einer Dunstquelle eines Kochfeldes entstehende, durch wenigstens einen Lüfter der Dunstabzugshaube (1) transportierte Wrasen gebildet ist, die über wenigstens eine Ansaugöffnung (4) zunächst in das Innere des Haubenkörpers (3) gelangen, wobei die Dunstabzugshaube (1) oberhalb des Kochfeldes angeordnet ist, und ihr Haubenkörper (3) das Kochfeld geometrisch im Wesentlichen überdeckt. Um die Dunstabzugshaube (1) an das geänderte Nutzungsverhalten mit Blick auf Küchenräume anzupassen und ihren Funktionsumfang bei unverändert guter Absaugleistung zu vergrößern, ist an einer dem Kochfeld abgewandten Seitenwand (6) des Haubenkörpers (3) wenigstens eine Schnittstelle (10) angeordnet ist, die mit einem netzwerkfähigen Endgerät verbindbar ist, und dass die Schnittstelle (10) sich in einer Aufnahme (11) befindet, in welcher ein Randbereich eines Gehäuses des netzwerkfähigen Endgeräts in seiner Gebrauchsstellung derart eingefasst ist, dass das netzwerkfähige Endgerät eine im Wesentlichen aufrechte Position einnimmt und einer in der Umgebung der Bedienseite des Haubenkörpers (3) hantierenden Bedienperson ein an ihm angeordnetes Anzeigemittel zuwendet.

## Beschreibung

Die Erfindung betrifft eine Dunstabzugshaube mit einem Abzugskamin und einem an dessen freiem Ende angeordneten Haubenkörper, in welchen ein Luftstromweg für an wenigstens einer Dunstquelle eines Kochfeldes entstehende, durch wenigstens einen Lüfter der Dunstabzugshaube transportierte Wrasen gebildet ist, die über wenigstens eine Ansaugöffnung zunächst in das Innere des Haubenkörpers gelangen, wobei die Dunstabzugshaube oberhalb des Kochfeldes angeordnet ist, und ihr Haubenkörper das Kochfeld geometrisch im Wesentlichen überdeckt.

Derartige Dunstabzugshauben sind verbreitet und stellen eine zuverlässige Einrichtung zur Verhinderung der Ausbreitung der Wrasen über die Umgebung des Kochfelds hinaus sowie ihren Abtransport dar, und helfen auf diese Weise, den Reinigungsaufwand des betreffenden Küchenraums zu verringern. In diesem Zusammenhang sollte durchaus auch die Eindämmung der Geruchsausbreitung auf das Kochumfeld nicht gering geschätzt werden. Allerding sind die betreffenden Dunstabzugshauben funktionell auf Ihre Absaug- und Luftreinigungseigenschaften beschränkt.

Tatsächlich unterliegt jedoch der lange Zeit zur reinen Speisezubereitung und dieser ggf. nachfolgenden Reinigung von Geschirr und Besteck gewidmete Küchenraum mit Kochfeld einem durchaus beachtlichen Wandel hinsichtlich seines Gebrauchs und Stellenwertes. Hierbei ist durchaus seit geraumer Zeit feststellbar, dass der Küchenraum nicht nur bei geselligen oder gesellschaftlichen Anlässen, sondern vielmehr auch im Alltagsleben ein zentraler Ort von Kommunikation geworden ist. Dies hängt zuweilen auch mit der gestiegenen Wertschätzung einer hochwertigen, dann gerne auch nachgerade zelebrierten Speisezubereitung und dem hierüber stattfindenden mündlichen Austausch zusammen.

In einem solchen Umfeld besteht die die Dunstabzugshaube an das geänderte Nutzungsverhalten mit Blick auf die Küchenräume anzupassen und ihren Funktionsumfang bei unverändert guter Absaugleistung zu vergrößern.

Dies Aufgabe wird gelöst durch eine Dunstabzugshaube der eingangs genannten Art, bei der an einer dem Kochfeld abgewandten Seitenwand des Haubenkörpers wenigstens eine Schnittstelle angeordnet ist, die mit einem netzwerkfähigen Endgerät verbindbar ist, und dass die Schnittstelle sich in einer Aufnahme befindet, in welcher ein Randbereich eines Gehäuses des netzwerkfähigen Endgeräts in seiner Gebrauchsstellung derart eingefasst ist, dass das Gerät eine im Wesentlichen aufrechte Position einnimmt und einer in der Umgebung der Bedienseite des Haubenkörpers hantierenden Bedienperson ein ihm angeordnetes Anzeigemittel zugewendet. Die Funktionserweiterung der Dunstabzugshaube besteht also zentral in dem Umstand, dass über die Schnittstelle mit ihrer Aufnahme im Wesentlichen im Gesichtsfeld der Bedienperson ein netzwerkfähiges Endgerät an der Haube angeordnet werden kann, was den Funktionsumfang der Haube erheblich erweitert, da hierdurch an der Haube zum einen eine Art Gegensprecheinrichtung einrichtbar ist, zum anderen moderne netzwerkfähige Endgeräte massiv erweiterte Funktionen hinsichtlich Anzeige- und Abspielmöglichkeiten sowie etwa Steuerung weiterer Geräte mitbringen. Hierdurch kann der Bedienperson beispielsweise ein Display zur Verfügung gestellt sein, an der im Prinzip jede Art von Information abrufbar sein kann, außerdem ließen sich im Sinne einer Fernsteuerung auch andere Einrichtungen, gegebenenfalls sogar im gleichen Küchenraum steuern, ohne das Kochfeld zu verlassen. Insbesondere kann das netzwerkfähige Endgerät ein Telekommunikationsendgerät sein und die im wesentlichen aufrechte Position des Endgeräts bedeutet, dass dieses auch eine gewisse Schrägstellung einnehmen kann, solange beispielsweise eine angezeigte Information noch erfassbar bleibt.

Um das netzwerkfähige Endgerät zuverlässig in seiner Gebrauchsstellung zu halten und ein unbeabsichtigtes Verkippen zu verhindern, kann bei einer Ausführung der Dunstabzugshaube die Schnittstelle wenigstens einen Sockel aufweisen, welcher zumindest überwiegend in der Aufnahme angeordnet ist, und an welchem der Randbereich des Gehäuses des netzwerkfähigen Endgeräts in der Gebrauchsstellung abgestützt ist.

Zweckmäßigerweise kann es zur Stützung des netzwerkfähigen Endgeräts in der Gebrauchsstellung an der Seitenwand bei eine Ausführung der Dunstabzugshaube vorsehen, an dem Sockel eine Mulde auszubilden, die das Gehäuse des netzwerkfähigen Endgeräts linienartig oder flächig berührt und/oder dass der Sockel wenigstens ein Stützteil aufweist, welches in der Gebrauchsstellung an einem dem Anzeigemittel abgewandten Bereich des Gehäuses anliegt.

Um mit und an dem netzwerkfähigen Endgerät an der Seitenwand des Haubenkörpers auf einer Vernetzung basierende Dienste verfügbar zu machen, kann es eine Weiterbildung der Dunstabzugshaube vorsehen, den wenigstens einen Sockel mit einem Durchgriff zu versehen, durch welchen ein elektrischer Verbinder zumindest bereichsweise greift, mit welchem das netzwerkfähige Endgerät elektrisch kontaktierbar ist.

Bevorzugt kann bei einer Weiterbildung das netzwerkfähigen Endgeräts mittels des elektrischen Verbinders mit wenigstens einer Spannungsversorgung und/oder wenigstens einer Telekommunikationsnetzeinrichtung und/oder wenigstens einem Anzeigemittel verbindbar sein, wobei Anzeigemittel auch in einem akustischen Sinne verstanden werden darf, und in diesem Fall beispielsweise als Lautsprecher auszubilden wäre, der etwa an dem Abzugskamin vorgesehen sein kann, um zum Beispiel an dem netzwerkfähigen Endgerät abrufbare oder gespeicherte Audio-Files abzuspielen.

Eine andere Ausführung der Dunstabzugshaube, mit welcher eine Vielzahl von netzwerkfähigen Endgeräten an der Haube verwendbar sind, ordnet vorteilhaft dem Haubenkörper eine Mehrzahl von in der Aufnahme anordenbaren unterschiedlichen Sockeln und Steckern zu, von denen eine ausgewählte Kombination in der Aufnahme austauschbar angeordnet ist.

Bei einer vorteilhaft ein nur geringes Raumvolumen einnehmenden Ausführung der Dunstabzugshaube ist der Haubenkörper durch zwei einander gegenüberliegende, viereckige, ebene Seitenwände gebildet, von welchen die eine dem Kochfeld zugewandt und die andere dem Kochfeld abgewandt ist, welche Seitenwände durch eine in deren Randbereich umlaufende Schmalseitenwand voneinander beabstandet sind, deren Eckbereiche insbesondere abgerundet sind.

Besonders bevorzugt bildet hierbei in einer Weiterbildung der Dunstabzugshaube der Haubenkörper der Dunstabzugshaube die Außenkontur des netzwerkfähigen Endgeräts nach.

Bei einer vorteilhaften Ausführungsform der Dunstabzugshaube werden die mittels des Lüfters in Richtung auf die dem Kochfeld zugewandte Seitenwand hin bewegten Wrasen über die gesamte von der Seitenwand überdeckte Fläche des Kochfeldes effektiv abgezogen, wenn der dem Kochfeld zugewandten Seitenwand des Haubenkörpers mit dem benachbarten Rand der Schmalseitenwand des Haubenkörpers einen schlitzartigen Durchtritt bildet, durch welchen der Wrasen in das Innere des Haubenkörpers tritt, an dem Haubenkörper also eine Randabsaugung vorgesehen ist.

Da die dem Kochfeld zugewandte Seitenwand des Haubenkörpers bei einer Randabsaugung keine weiteren Ansaugöffnungen an der Seitenwandfläche benötigt, kann es eine weitere vorteilhafte Ausführung der Dunstabzugshaube vorsehen, dass die betreffende Seitenwand eine den überwiegenden Bereich ihrer Fläche einnehmende Öffnung aufweist, die durch einen opaken, transparenten, teiltransparenten oder gefärbten lichtdurchlässigen Einsatz überdeckt ist, der den Durchtritt einer von wenigstens einem innerhalb des Haubenkörpers angeordneten Leuchtmittel ausgesandte Lichtmenge durch die Öffnung in Richtung des Kochfeldes gestattet. Auf diese Weise kann das durch die überdeckte Öffnung in den Küchenraum tretende Licht bestimmte Stimmungen erzeugen oder unterstützen und zugleich, obwohl kein im Sinne eines Spots gerichtetes Licht, das Umfeld der Kochstelle besser ausleuchten. Im Vordergrund steht bei dieser Beleuchtungsform, die mit eher diffusem Licht arbeitet, aber klar die durch das Licht erzeugte Stimmung, die beispielsweise auch anhand eines die vorherrschenden Lichtverhältnisse ermittelnden Sensors steuerbar sein kann. Die Öffnung kann sich beispielsweise über einen überwiegenden Teil der Länge des Haubenkörper fast über dessen gesamte Breite erstrecken und im Bereich der beiden Querenden einen gewissen randständigen Längenbereich aussparen.

Um den den gewünschten Licht- und damit gegebenenfalls auch Farbeindruck anhand des erwähnten Einsatzes sicher und zuverlässig vermitteln zu können, ist es bei einer Weiterbildung der Dunstabzugshaube vorgesehen, dass der Einsatz an einem in Richtung der Öffnungsmitte vorspringenden, insbesondere umlaufenden Bereich der Öffnung abgestützt ist und/oder von einem auf der dem Kochfeld abgewandten Seite der Seitenwand befindlichen Haltemittel in seiner Gebrauchsstellung gehalten ist. Das betreffende Haltemittel kann zum Beispiel durch einer Folie oder ein den Einsatz überdeckende Kunststoffplatte oder ein Kunststofflid gebildet sein, dessen Ränder gegebenenfalls lösbar, aber fest mit dem Öffnungsrand verbindbar sind, etwa durch einen Eingriff des Randes in eine Nut oder dergleichen. Dies kann notwendig sein, wenn sich bei einer Verwendung von Glasmaterial andere, etwa den Einsatz stark klemmende und dabei potentiell verletzende Haltemittel verbieten und trotzdem eine weitgehend spielfrei Anlage des Einsatzes an dem Öffnungsrand erreicht werden soll. Eine gerichtetere Beleuchtung nur des Kochfeldes kann durch weitere, mit anderen Leuchtmitteln hinterleuchtete und/oder mit anderen Einsätzen versehene kleinere Öffnungen der Seitenwand erreicht werden.

Um gerade die dem Kochfeld zugewandte Seitenwand beispielsweise für einen Reinigungsvorgang gut erreichen zu können oder aber auch um den erwähnten Einsatz gegen einen anderen austauschen zu können, kann bei einer weiteren Ausführung der Dunstabzugshaube die dem Kochfeld zugewandte Seitenwand an einer der Längsseiten des Haubenkörpers über eine Schwenkeinrichtung mit diesem verbunden sein, über welche die Seitenwand in Richtung auf das Kochfeld hin gegenüber dem Haubenkörper verschwenkbar ist, so dass in der Offenstellung die seitenwand gut zugänglich ist.

In einer Weiterbildung ist es dann zweckmäßig beispielsweise vorgesehen, die Seitenwand an dem Haubenkörper mittels eines Haltemittels, insbesondere eines teleskopierbaren Federelements zu halten, und die Seitenwand an dem Haltemittel sanft aus einer Geschlossen- in eine Offenstellung und zurück zu überführen.

Vorteilhaft ist bei einer anderen Ausführung der Dunstabzugshaube die dem Kochfeld abgewandte Seitenwand mit einer Abführöffnung versehen, in deren Randbereich das freie Ende des Abzugskamins mündet, im Sinne einer guten Abdichtung kann der Randbereich der Abfuhröffnung des Haubenkörpers das freie Ende des Abzugskamins auch einfassen.

Um aus den Wrasen die mit transportierten Anteile an Wasser und Luft frühzeitig abzuscheiden, und gegebenenfalls die erfindungsgemäße Dunstabzugshaube in mehreren Betriebsarten fahren zu können, kann im Luftstromweg zwischen Haubenkörper und Abzugskamin, insbesondere in der Mündungsöffnung des dem Haubenkörper zugewandten freien Endes des Abzugskamins wenigstens ein Filterelement angeordnet sein. Bevorzugt kann hierbei das wenigstens eine Filterelement die Eintrittsöffnung des Abzugskamins mittig überdecken, insbesondere in den Querschnitt eingepasst sein. Um das wenigstens eine Filterelement in der Eintrittsöffnung gegen seine durch die abgeschiedenen Partikel größer werdende Schwerkraft zu halten, können an der Eintrittsöffnung des Abzugskamins Befestigungsmittel vorgesehen sein, die insbesondere durch Vorsprünge oder andere geometrische Merkmale der Formgebung der Eintrittsöffnung verwirklicht sein können, in welchem Fall sie nicht zusätzlich anzuordnen wären. Das Befestigungsmittel kann aber beispielsweise auch ein mit dem Öffnungsrand zu verbindender Rahmen sein.

Um die Funktionen sowohl der Dunstabzugshaube als auch des daran angeordnete netzwerkfähige Endgerät sicher und einwandfrei bedienen zu können, ist zweckmäßigerweise bei einer Ausführungsform der Dunstabzugshaube in einem der Schnittstelle zugeordneten Schmalseitenwandbereich eine Anzahl von Bedienelementen angeordnet, deren Betätigung die Funktion der Dunstabzugshaube und/oder des netzwerkfähigen Endgeräts sowie weiterer zugeordneter Einrichtungen beeinflusst.

Um einer Bedienperson den Schaltzustand von Funktionalitäten oder deren Statuswechsel an der Dunstabzugshaube und/oder dem netzwerkfähigen Endgerät zweifelsfrei vermitteln zu können sieht es eine Weiterbildung der Dunstabzugshaube vor, den Bedienelementen benachbart, im Bereich der Aufnahme der Schnittstelle wenigstens ein einer Funktion oder Funktionsänderung des netzwerkfähigen Endgeräts oder der Dunstabzugshaube zugeordnetes optisches Signalmittel anzuordnen. Diese kann etwa bespielweise einen Farbwechsel bei einem Funktionswechsel, oder auch bei korrekter Kontaktierung oder beim Starten eines Ladevorgangs eines zugeordneten Akkumulators durch das netzwerkfähige Endgerät oder dergleichen mehr anzeigen. Hierbei kann das Signalmittel zum Beispiel als hinterleuchtete, vertikal angeordnete Lücke der Schmalseitenwand mit gleichmäßigen, einander gegenüberliegenden Rändern ausgebildet sein. Es sind aber auch andre Ausbildungen denkbar.

Die Erfindung wird nachstehend anhand von Ausführungsbeispielen in der Zeichnung näher erläutert. In teilweise schematisierter Darstellung zeigen hierbei die
- Fig.1: ein erstes Ausführungsbeispiel der Dunstabzugshaube als Ausschnitt in perspektivischer teilweise explodierter Ansicht mit Abzugskamin, Haubenkörper und der Schnittstelle mit zugeordnetem Sockel;
- Fig.2: eine perspektivische, teilexplodierte Ansicht eines zweiten Ausführungsbeispiels der Dunstabzugshaube mit an einem Haltemittel gehaltener, dem Kochfeld zugewandter Seitenwand und Filterelement;
- Fig.3: einen teilgeschnittenen Detailausschnitt des Ausführungsbeispiels aus der Fig.2, in welcher die Befestigung des lichtdurchlässigen Abschnitts genauer zu erkennen ist.

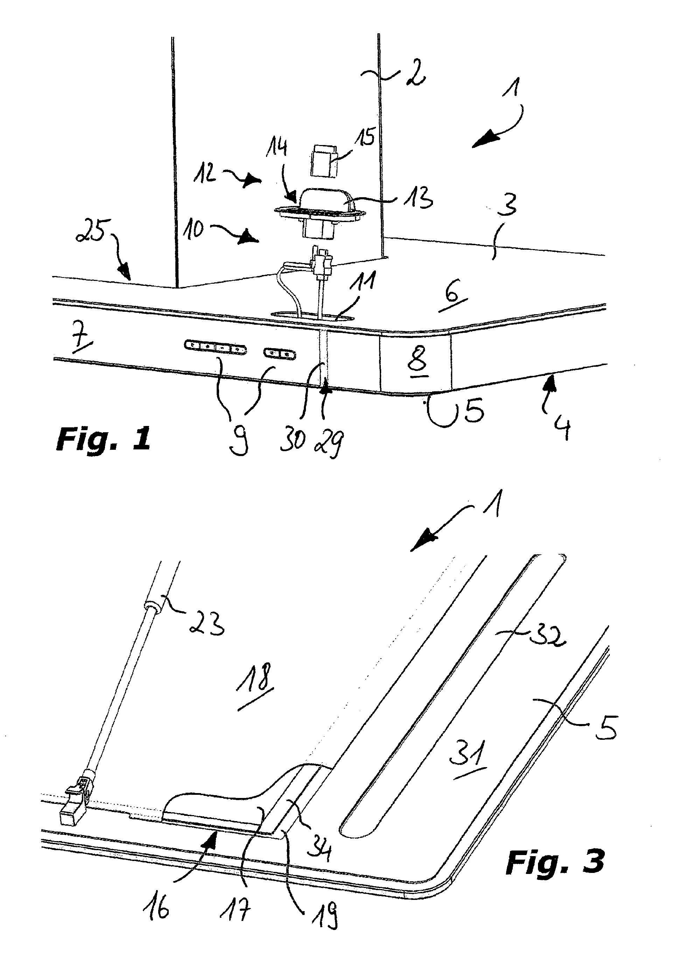

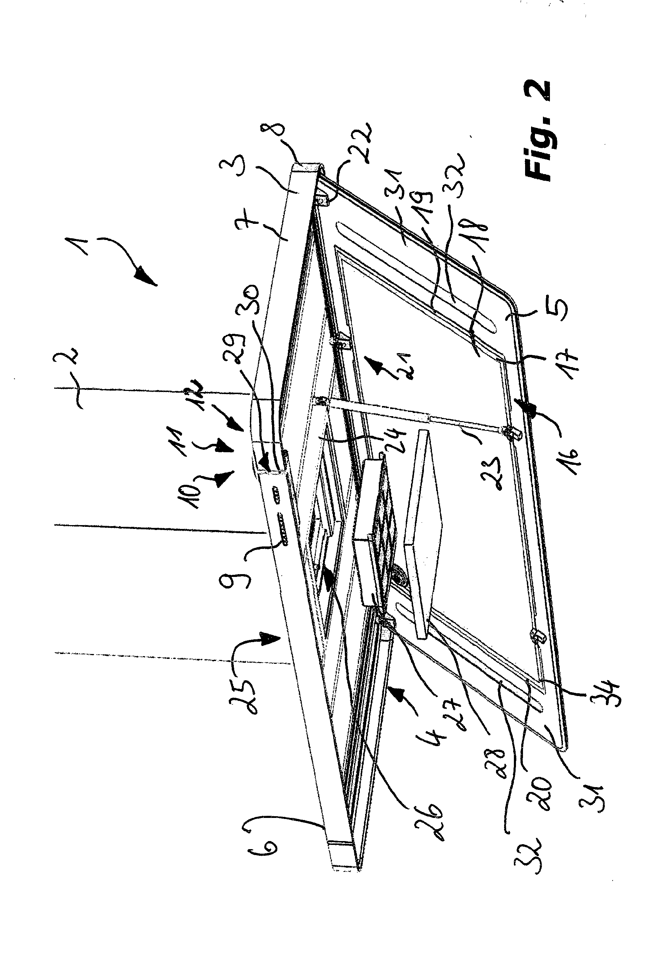

In den Fig.1 und 2 ist jeweils eine im Ganzen mit 1 bezeichnete Dunstabzugshaube mit einem Abzugskamin 2 und einem an dessen freiem Ende angeordneten Haubenkörper 3 zu erkennen, in welchen ein Luftstromweg für an einer nicht dargestellten Dunstquelle eines ebenfalls nicht dargestellten Kochfeldes entstehende, durch wenigstens einen im Innern des Abzugskamins 2 befindlichen Lüfter transportierte Wrasen gebildet ist. Die Wrasen gelangen hierbei über eine schlitzartige, im Randbereich der dem Kochfeld zugewandten Seitenwand 5 angeordnete, an dem Haubenkörper umlaufende, in Schließstellung der Seitenwand 5 nach unten geöffnete Ansaugöffnung 4 in das Innere des Haubenkörpers 3. Die Dunstabzugshaube 1 ist oberhalb des Kochfeldes angeordnet und ihr Haubenkörper 3 überdeckt das Kochfeld geometrisch im Wesentlichen.

Der Haubenkörper ist, gut erkennbar in den Fig.1 und 2, durch zwei einander gegenüberliegende, viereckige, ebene Seitenwände 5, 6 gebildet, von welchen die eine dem Kochfeld zugewandt und die andere von dem Kochfeld abgewandt ist. Die Seitenwände 5, 6 sind durch eine in deren Randbereich umlaufende Schmalseitenwand 7 voneinander beabstandet sind, deren Eckbereiche 8 abgerundet sind.

In einem Randbereich der dem Betrachter in der Fig. 1 zugewandten rückwärtigen, dem Kochfeld abgewandten Seitenwand 6 des Haubenkörpers 3 ist eine Schnittstelle 10 angeordnet, die mit einem nicht dargestellten netzwerkfähigen Endgerät verbindbar ist. Die Schnittstelle befindet sich in einer sich in einer Aufnahme 11, in welcher ein Randbereich eines Gehäuses des netzwerkfähigen Endgeräts in seiner Gebrauchsstellung derart eingefasst ist, dass das netzwerkfähige Endgerät eine im Wesentlichen aufrechte Position einnimmt und einer in der Umgebung der Bedienseite 33 des Haubenkörpers 3 hantierenden Bedienperson ein an ihm angeordnetes Anzeigemittel zuwendet. In dem Ausführungsbeispiel ist eine Bedienseite 33 des Haubenkörpers 3 durch die Bedienelemente 9 definiert, die sich an der Schmalseitenwand 7 befinden. Erkennbar weist die Schnittstelle 10 einen Sockel 12 auf, der bei korrekter Anordnung den Rand der Aufnahme 111 nur wenig überragt, und zwar mit dem Stützteil 13, welches für den Betrachter nach hinten absteht und in der Gebrauchsstellung an einem dem Anzeigemittel abgewandten Bereich des Gehäuses des netzwerkfähigen Endgeräts anliegt. Der Sockel 12 ist überdies mit einem Durchgriff 14 versehen, durch welchen der elektrische Verbinder 15 greift, mit welchem das netzwerkfähige Endgerät elektrisch kontaktierbar ist. Der für den Betrachter untere Teil des Verbinders 15 ist dabei mit dem Netzanschluss 16 kontaktiert.

Insbesondere in den Fig.2 erkennt man, dass der Rand der dem Kochfeld zugewandten Seitenwand 5 des Haubenkörpers 3 der Dunstabzugshaube 1 mit dem benachbarten Rand der Schmalseitenwand 7 des Haubenkörpers 3 einen schlitzartigen Durchtritt als Ansaugöffnung 4 bildet, durch welchen der Wrasen in das Innere des Haubenkörpers 3 tritt. Auch zusammen mit der Fig.3 erkennt man weiter, dass die dem Kochfeld zugewandte Seitenwand 5 des Haubenkörpers 3 eine den überwiegenden Bereich ihrer Fläche einnehmende Öffnung 16 aufweist, die durch einen in diesem Fall transparenten, lichtdurchlässigen Einsatz 17 überdeckt ist, der den Durchtritt einer von wenigstens einem innerhalb des Haubenkörpers angeordneten, der besseren Übersichtlichkeit halber weggelassenen Leuchtmittel ausgesandte Lichtmenge durch die Öffnung 20 in Richtung des Kochfeldes gestattet. Dieser Einsatz 17 ist mit seinem angefasten Randbereich, an einem in Richtung der Öffnungsmitte vorspringenden, umlaufenden Bereich 19 der Öffnung 16 abgestützt, wobei die Fase 34 sich auf der dem Bereich 19 abgewandten Seite befindet. Der Einsatz 17 ist hierbei und von einem auf der dem Kochfeld abgewandten Seite der Seitenwand 5 befindlichen plattenartigen Haltemittel 18 in seiner Gebrauchsstellung gehalten. Dessen Rand wiederum in eine an dem Umlaufenden Bereich 19 befindliche; in Richtung der Öffnungsmitte offene Nut 20 eingreift, wodurch der Einsatz 17 in seiner Gebrauchsstellung gehalten ist.

Die betreffende, dem Kochfeld zugewandte Seitenwand 5 wird an einer der Längsseiten des Haubenkörpers 3 durch eine Schwenkeinrichtung 21 bildende Scharniere 22 mit dem Haubenkörper 3 verbunden, derart ist die Seitenwand 5 in Richtung auf das Kochfeld hin gegenüber dem Haubenkörper 3 verschwenkbar. Hierfür ist weiter an der Innenseite der Seitenwand 5 ein teleskopierbares, pneumatisches Federelement 23 angeordnet, welches mit seinem freien Ende an einem Steg 24 im Haubenkörperinneren verbindbar ist, wodurch die Seitenwand 5 an dem Federelement 23 als Haltemittel aus ihrer Geschlossen- in eine Offenstellung und zurück überführbar ist.

Den Fig.1 und 2 ist weiter zu entnehmen, dass die dem Kochfeld abgewandte Seitenwand 6 in einem zentralen, mittleren mit einer Öffnung 25 versehen ist, in deren Randbereich das freie Ende des Abzugskamins 2 mündet, das freie Ende des Abzugskamins 2 also von dem betreffenden Randbereich eingefasst ist, und der Abzugskamin 2 von dem Haubenkörper 3 in vertikaler Richtung weg ragt. Hierzu erkennt man nur in der Fig.2, dass im Luftstromweg zwischen Haubenkörper 3 und Abzugskamin 2 in der Mündungsöffnung 26 des dem Haubenkörper 3 zugewandten freien Endes des Abzugskamins 2 ein Filterelement 27 angeordnet ist, dass durch einen Rahmen 28 in seiner Position in der Mündungsöffnung 26 gehalten ist.

Wiederum in den Fig.1 und 2 ist zu erkennen, dass in einem der Schnittstelle 10 zugeordneten Bereich der Schmalseitenwand 7 eine Anzahl von Bedienelementen 9 angeordnet ist, deren Betätigung die Funktion der Dunstabzugshaube 1 und/oder des netzwerkfähigen Endgeräts beeinflusst. Weiter ist auch erkennbar dass den Bedienelementen 9 benachbart im Bereich der Aufnahme 11 der Schnittstelle 10 ein optisches Signalmittel 29 angeordnet ist, das als hinterleuchtete, vertikal angeordnete Lücke 30 der Schmalseitenwand 7 mit gleichmäßigen, einander gegenüberliegenden Rändern ausgebildet ist. Schließlich erkennt man an den dem Kochfeld zugewandten Seitenwänden 5 der Fig.2 und 3, dass die Öffnung 16 die überwiegende Fläche der Seitenwand 5 mittig hinsichtlich von deren Länge einnimmt. Dabei sind in den beiden randständigen Seitenbereichen 31 langlochartige Öffnungen 32 angeordnet, die die Breitenerstreckung der Öffnung 16 aufweisen und vom Licht anderer Leuchtmittel als die hauptsächliche Öffnung 16 durchtreten werden.

Demnach betrifft die vorstehend beschriebene Erfindung also eine Dunstabzugshaube 1 mit einem Abzugskamin 2 und einem an dessen freiem Ende angeordneten Haubenkörper 3, in welchen ein Luftstromweg für an wenigstens einer Dunstquelle eines Kochfeldes entstehende, durch wenigstens einen Lüfter der Dunstabzugshaube 1 transportierte Wrasen gebildet ist, die über wenigstens eine Ansaugöffnung 4 zunächst in das Innere des Haubenkörpers 3 gelangen, wobei die Dunstabzugshaube 1 oberhalb des Kochfeldes angeordnet ist, und ihr Haubenkörper 3 das Kochfeld geometrisch im Wesentlichen überdeckt. Um die Dunstabzugshaube 1 an das geänderte Nutzungsverhalten mit Blick auf Küchenräume anzupassen und ihren Funktionsumfang bei unverändert guter Absaugleistung zu vergrößern, ist an einer dem Kochfeld abgewandten Seitenwand 6 des Haubenkörpers 3 wenigstens eine Schnittstelle 10 angeordnet ist, die mit einem netzwerkfähigen Endgerät verbindbar ist, und dass die Schnittstelle 10 sich in einer Aufnahme 11 befindet, in welcher ein Randbereich eines Gehäuses des netzwerkfähigen Endgeräts in seiner Gebrauchsstellung derart eingefasst ist, dass das netzwerkfähige Endgerät eine im Wesentlichen aufrechte Position einnimmt und einer in der Umgebung der Bedienseite 33 des Haubenkörpers 3 hantierenden Bedienperson ein an ihm angeordnetes Anzeigemittel zuwendet.

## Patentansprüche

1. Dunstabzugshaube mit einem Abzugskamin und einem an dessen freiem Ende angeordneten Haubenkörper, in welchen ein Luftstromweg für an wenigstens einer Dunstquelle eines Kochfeldes entstehende, durch wenigstens einen Lüfter der Dunstabzugshaube transportierte Wrasen gebildet ist, die über wenigstens eine Ansaugöffnung zunächst in das Innere des Haubenkörpers gelangen, wobei die Dunstabzugshaube oberhalb des Kochfeldes angeordnet ist, und ihr Haubenkörper das Kochfeld geometrisch im Wesentlichen überdeckt, **dadurch gekennzeichnet, dass** an einer dem Kochfeld abgewandten Seitenwand (6) des Haubenkörpers (3) wenigstens eine Schnittstelle (10) angeordnet ist, die mit einem netzwerkfähigen Endgerät verbindbar ist, und dass die Schnittstelle (10) sich in einer Aufnahme (11) befindet, in welcher ein Randbereich eines Gehäuses des netzwerkfähigen Endgeräts in seiner Gebrauchsstellung derart eingefasst ist, dass das netzwerkfähige Endgerät eine im Wesentlichen aufrechte Position einnimmt und einer in der Umgebung einer Bedienseite (33) des Haubenkörpers (3) hantierenden Bedienperson ein an ihm angeordnetes Anzeigemittel zuwendet.

2. Dunstabzugshaube nach Anspruch 1, **dadurch gekennzeichnet, dass** die Schnittstelle (10) wenigstens einen Sockel (12) aufweist, welcher zumindest überwiegend in der Aufnahme (11) angeordnet ist und an welchem der Randbereich des Gehäuses des netzwerkfähigen Endgeräts in der Gebrauchsstellung abgestützt ist.

3. Dunstabzugshaube nach Anspruch 2, **dadurch gekennzeichnet, dass** der wenigstens eine Sockel (12) eine Mulde aufweist, die das Gehäuse des netzwerkfähigen Endgeräts linienartig oder flächig berührt und/oder wenigstens ein Stützteil (13) aufweist, welches in der Gebrauchsstellung an einem dem Anzeigemittel abgewandten Bereich des Gehäuses anliegt.

4. Dunstabzugshaube nach Anspruch 2 oder 3, **dadurch gekennzeichnet, dass** der wenigstens eine Sockel (12) mit einem Durchgriff (14) versehen ist, durch welchen ein elektrischer Verbinder (15) zumindest bereichsweise greift, mit welchem das netzwerkfähige Endgerät elektrisch kontaktierbar ist.

5. Dunstabzugshaube nach Anspruch 4, **dadurch gekennzeichnet, dass** das netzwerkfähige Endgerät mittels des elektrischen Verbinders (15) mit wenigstens einer Spannungsversorgung und/oder wenigstens einer Telekommunikationsnetzeinrichtung und/oder wenigstens einem Anzeigemittel verbindbar ist.

6. Dunstabzugshaube nach einem der vorhergehenden Ansprüche, **dadurch gekennzeichnet, dass** dem Haubenkörper (3) eine Mehrzahl von in der Aufnahme (11) anordenbaren unterschiedlichen Sockeln (12) und Verbindern (15) zugeordnet ist, von denen eine ausgewählte Kombination in der Aufnahme (11) austauschbar angeordnet ist.

7. Dunstabzugshaube nach einem der vorhergehenden Ansprüche, **dadurch gekennzeichnet, dass** der Haubenkörper (3) durch zwei einander gegenüberliegende, viereckige, ebene Seitenwände (5, 6) gebildet ist, von welchen die eine dem Kochfeld zugewandt und die andere von dem Kochfeld abgewandt ist, welche Seitenwände (5, 6) durch eine in deren Randbereich umlaufende Schmalseitenwand (7) voneinander beabstandet sind, deren Eckbereiche (8) insbesondere abgerundet sind.

8. Dunstabzugshaube nach einem der vorhergehenden Ansprüche, **dadurch gekennzeichnet, dass** der Haubenkörper (3) der Dunstabzugshaube (1) die Außenkontur des netzwerkfähigen Endgeräts nachempfindet.

9. Dunstabzugshaube nach einem der vorhergehenden Ansprüche, **dadurch gekennzeichnet, dass** der Rand der dem Kochfeld zugewandten Seitenwand (5) des Haubenkörpers (3) mit dem benachbarten Rand der Schmalseitenwand (7) des Haubenkörpers (3) einen schlitzartigen Durchtritt als Ansaugöffnung (4) bildet, durch welchen der Wrasen in das Innere des Haubenkörpers (3) tritt.

10. Dunstabzugshaube nach einem der vorhergehenden Ansprüche, **dadurch gekennzeichnet, dass** die dem Kochfeld zugewandte Seitenwand (5) des Haubenkörpers (3) eine den überwiegenden Bereich ihrer Fläche einnehmende Öffnung (16) aufweist, die durch einen opaken, transparenten, teiltransparenten oder gefärbten lichtdurchlässigen Einsatz (17) überdeckt ist, der den Durchtritt einer von wenigstens einem innerhalb des Haubenkörpers (3) angeordneten Leuchtmittel ausgesandte Lichtmenge durch die Öffnung (16) in Richtung des Kochfeldes gestattet.

11. Dunstabzugshaube nach Anspruch 10, **dadurch gekennzeichnet, dass** der Einsatz (17) an einem in Richtung der Öffnungsmitte vorspringenden, insbesondere umlaufenden Bereich (19) der Öffnung (16) abgestützt ist und/oder von einem auf der dem Kochfeld abgewandten Seite der Seitenwand befindlichen Haltemittel in seiner Gebrauchsstellung gehalten ist.

12. Dunstabzugshaube nach einem der vorhergehenden Ansprüche, **dadurch gekennzeichnet, dass** die dem Kochfeld zugewandte Seitenwand (5) an einer der Längsseiten des Haubenkörpers (3) über eine Schwenkeinrichtung (21) mit diesem verbunden ist, über welche die Seitenwand (5) in Richtung auf das Kochfeld hin gegenüber dem Haubenkörper (3) verschwenkbar ist.

13. Dunstabzugshaube nach einem der vorhergehenden Ansprüche, **dadurch gekennzeichnet, dass** die Seitenwand (5) an dem Haubenkörper (3) mittels eines Haltemittels (23), insbesondere eines teleskopierbaren Federelements, gehalten und aus einer Geschlossen- in eine Offenstellung überführbar ist.

14. Dunstabzugshaube nach einem der vorhergehenden Ansprüche, **dadurch gekennzeichnet, dass** die dem Kochfeld abgewandte Seitenwand (6) mit einer Öffnung (25) versehen ist, in deren Randbereich das freie Ende des Abzugskamins (2) mündet bzw. dieses von dem Randbereich eingefasst ist.

15. Dunstabzugshaube nach einem der vorhergehenden Ansprüche, **dadurch gekennzeichnet, dass** im Luftstromweg zwischen Haubenkörper (3) und Abzugskamin (2), insbesondere in der Mündungsöffnung (26) des dem Haubenkörper (3) zugewandten freien Endes des Abzugskamins (2) wenigstens ein Filterelement (27) angeordnet ist.

16. Dunstabzugshaube nach einem der vorhergehenden Ansprüche, **dadurch gekennzeichnet, dass** in einem der Schnittstelle (10) zugeordneten Bereich der Schmalseitenwand (7) eine Anzahl von Bedienelementen (9) angeordnet ist, deren Betätigung die Funktion der Dunstabzugshaube (1) und/oder des netzwerkfähigen Endgeräts beeinflusst.

17. Dunstabzugshaube nach Anspruch 16, **dadurch gekennzeichnet, dass** den Bedienelementen (9) benachbart im Bereich der Aufnahme (11) der Schnittstelle (10) wenigstens ein einer Funktion oder Funktionsänderung des netzwerkfähigen Endgeräts oder der Dunstabzugshaube (1) zugeordnetes optisches Signalmittel (29) vorgesehen ist.
